# EUROPEAN PATENT SPECIFICATION

(11) **EP 4 223 612 B1**
(45) Date of publication and mention of the grant of the patent: **24.07.2024**
(21) Application number: 22155085.8
(22) Date of filing: 03.02.2022
(51) Int. Cl.: B61H 5/00, F16D 55/224, F16D 66/00

(54) **BRAKE SYSTEM FOR A RAIL VEHICLE**
BREMSSYSTEM FÜR EIN SCHIENENFAHRZEUG
SYSTÈME DE FREINAGE POUR UN VÉHICULE FERROVIAIRE

(43) Date of publication of application: 09.08.2023
(73) Proprietor: Dellner Bubenzer AB, 781 70 Borlänge (SE)
(72) Inventor: PRIM, Viktor, 811 61 Sandviken (SE)
(74) Representative: Brann AB

(56) References cited:
- DE-U1- 29 923 681

## Description

### TECHNICAL FIELD

The present invention relates generally to immobilization of rail vehicles. Especially, the invention relates to a brake system for a rail vehicle according to the preamble of claim 1.

### BACKGROUND

In operation of an electrically powered rail vehicle, the onboard motors are typically engaged as generators to decelerate the rail vehicle. However, for efficiency and safety reasons, one cannot rely solely on this braking strategy. In particular, a brake function will always be needed to ensure emergency braking functionality and that the rail vehicle remains stationary after that it has been brought to a stop.

In many cases, the same brake units are used for different types of braking functionality, such as service braking, emergency braking and parking braking. Today's rail vehicle brakes characteristically use pneumatically regulated brakes. This is disadvantageous inter alia due to their slow and imprecise regulation, however also because the risk of leakages and resulting malfunction.

Recently, electrically controlled brakes have been presented as an alternative to pneumatically regulated brakes. For example, US 2020/0198605 describes a microcomputer-controlled electromechanical braking system containing an electromechanical braking control device and an electromechanical braking unit. The electromechanical braking control device includes a braking microcomputer control unit, an electromechanical control unit and a standby power supply module. The braking microcomputer control unit receives a braking instruction signal sent by a driver or an automatic driving system, performs the calculation of a target braking force and braking management. If the electromagnetic brake is powered off, a screw-and-nut arrangement locks the brake to maintain the braking force. When a torque motor rotor rotates reversely, the nut makes a translational reversely, and the braking force is released. the document DE 299 23 681 U1 describes another state-of-the-art tong-type electromechanical disc brake, with a separate park lock and a force sensor, powered by a conventional electric motor via a belt drive.

Thus, an electromechanical braking system is known, which has a locking mechanism to maintain the brake force if the power supply to the brake fails. However, since the known design cannot verify that the brake's friction elements are truly kept in the intended braking position, with or without electricity, there is room for improvement of the braking systems reliability.

### SUMMARY

The object of the present invention is therefore to offer a solution that solves the above problem and ensures that a specified braking force always remains applied, for instance also if the electric power supply to the brakes is interrupted.

According to the invention, the object is achieved by a brake system for a rail vehicle, which brake system contains a brake actuator, a brake unit, a gear assembly, a self-locking mechanism, a stepper motor and a position sensor. The brake actuator is configured to receive a brake command, and in response thereto produce an electric brake-force signal. The brake unit includes first and second pressing members and a rotatable member being mechanically linked to at least one wheel of the rail vehicle. The brake unit is configured to receive the electric brake-force signal, and in response thereto cause the first and second pressing members to apply a braking force to the rotatable member. The gear assembly is arranged to operate mechanically on the first and second pressing members. In response to the electric brake-force signal, the stepper motor is configured to act on the gear assembly so as to cause the first and second pressing members to move towards or away from the rotatable member and attain a specified position interrelationship. The self-locking mechanism is configured to automatically lock the first and second pressing members if a supply of electric power to the brake unit fails. The position sensor is configured to produce a position signal indicating an angular position of a power transmission shaft of the stepper motor. The brake unit is further configured to receive the position signal, and based thereon determine whether the specified position interrelationship has been attained. If so, the brake unit is configured to stop producing the electric brake-force signal, thereby allowing the self-locking mechanism to lock the first and second pressing members in the specified position interrelationship.

The above brake system is advantageous because the stepper motor is capable of providing highly accurate positioning of its power transmission shaft. In addition to that, the position sensor provides a confirmation that the specified position interrelationship of the first and second pressing members has actually been attained. In combination with the self-locking functionality, this accomplishes an extremely reliable brake. Moreover, any malfunction of the brake unit can be identified immediately by comparing a position commanded to the stepper motor with the position signal received from the position sensor.

According to one embodiment of the invention, the brake unit also contains a load-cell sensor configured to produce a sensor signal representing the magnitude of a force applied by the first and second pressing members on the rotatable member. Moreover, the brake actuator is configured to receive the sensor signal, and based thereon generate a status message confirming that the brake command has been effected. Consequently, an extra confirmation of a successful braking is offered.

Preferably, the self-locking mechanism is configured to exclusively allow the specified position interrelationship between the first and second pressing members to be altered in response to action by the stepper motor, which action, in turn, is caused by the electric brake-force signal. Thus, for example, an applied parking brake can only be released by a negating parking-brake command.

According to one embodiment of the invention, the gear assembly contains a worm gear arrangement with such a gearing ratio that the specified position interrelationship de facto cannot be altered by reverse movement, i.e. by action on the first and second pressing members. Thus the worm gear arrangement constitutes the self-locking mechanism. This is cost-efficient and provides an overall compact design.

According to another embodiment of the invention, the self-locking mechanism contains a hydraulic lock mechanism, a motor-axle lock mechanism or a toothed-wheel lock mechanism that is arranged on a power transmission shaft of the stepper motor. This allows for alternative types of gear assemblies, e.g. planetary gears, which are generally more efficient than the worm gear arrangement.

Specifically, if the self-locking mechanism contains the hydraulic lock mechanism, this mechanism, in turn, may include a hydraulic cylinder with first and second fluid compartments separated by a wall member that is mechanically linked to an actuator operated via the power transmission shaft of the stepper motor. The hydraulic lock mechanism further includes a bypass conduit interconnecting the first and second fluid compartments and a counterbalanced valve arranged on the bypass conduit. In an open state, the counterbalanced valve is configured to enable hydraulic fluid to pass between the first and second fluid compartments and thus allow the wall member to move along the hydraulic cylinder. In a closed state, the counterbalanced valve is configured to prevent hydraulic fluid to pass between the first and second fluid compartments thus locking the wall member in a particular position with respect to the hydraulic cylinder. Thereby, by closing the counterbalanced valve when the specified position interrelationship has been attained, a secure locking in this position is ensured.

Specifically, if the self-locking mechanism contains the motor-axle lock mechanism, this mechanism, in turn, may include a rotatable plate mechanically linked to the power transmission shaft, and at least one locking pin configured to selectively either lock the rotatable plate against a fix part of the stepper motor, or allow the rotatable plate to rotate freely around a symmetry axis of the power transmission shaft. Thereby, by locking the rotatable plate against the fix part of the stepper motor when the specified position interrelationship has been attained, a secure locking in this position is ensured in an alternative manner and through a very compact design.

Specifically, if the self-locking mechanism contains the toothed-wheel lock mechanism, this mechanism, in turn, may include first and second toothed rings. The first toothed ring is non-rotatable, and the second toothed ring is mechanically linked to the power transmission shaft. At least one of the first and second toothed rings is configured to move along a symmetry axis of the power transmission shaft to selectively either cause a first set of teeth of the first toothed ring to either engage a second set of teeth of the second toothed ring, or not. In the former case, a rotation of the power transmission shaft is prevented, and in the latter case, the power transmission shaft is allowed to rotate freely around its symmetry axis. Thereby, by causing the first and second rings to engage when the specified position interrelationship has been attained, a secure locking in this position is ensured in yet an alternative manner and through another highly compact design.

According to yet another embodiment of the invention, the brake system contains a backup power unit configured to receive electric power from a power line in the rail vehicle during operation of the rail vehicle and accumulate the received electric power. The backup power unit is further configured to provide the accumulated electric power to the brake actuator and the brake unit in case of an outage of the electric power on the power line. Consequently, the brake system can be operated also when the rail vehicle does not receive any input power.

For example, the backup power unit may contain at least one rechargeable battery and a battery charger connected to the power line and configured to transfer electric power received from the power line to the at least one rechargeable battery. The at least one rechargeable battery is configured to feed electric power to the brake actuator and the brake unit if the electric power on the power line fails. Alternatively, or additionally, the backup power unit may contain at least one capacitive element and a rectifier connected to the power line and configured to transfer electric power received from the power line to the at least one capacitive element. The at least one capacitive element is arranged to feed electric power to the brake actuator and the brake unit if the electric power on the power line fails.

According to still another embodiment of the invention, the brake actuator is connected to at least one data bus in the rail vehicle. The at least one data bus is configured to control signals and/or status messages. For example, the brake actuator may be configured to receive the brake command as a control signal via the data bus. Hence, the brake can be controlled in an overall efficient and reliable manner.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: schematically illustrates a rail vehicle equipped with a brake system according to one embodiment of the invention;
- Figure 2: shows a brake unit according to one embodiment of the invention;
- Figure 3: illustrates how a gear assembly may be implemented according to one embodiment of the invention;
- Figures 4-6: exemplify different self-locking mechanisms according to embodiments of the invention;
- Figure 7: shows a backup power unit according to a first embodiment of the invention; and
- Figure 8: shows a backup power unit according to a second embodiment of the invention;

### DETAILED DESCRIPTION

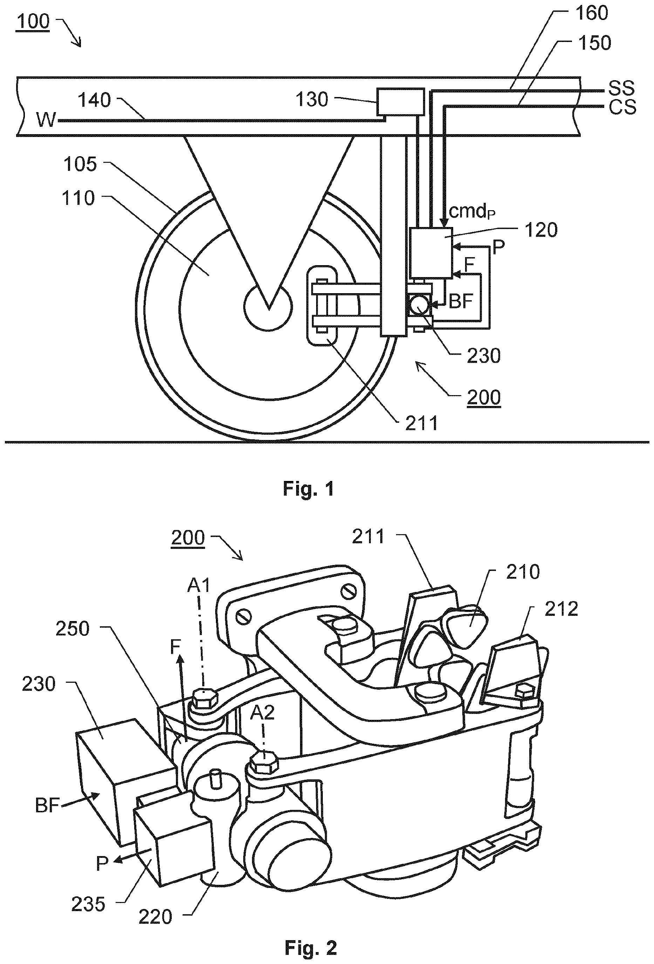

Figure 1 schematically illustrates a rail vehicle 100 equipped with a brake system according to one embodiment of the invention. In Figure 2; we see a brake unit 200 according to one embodiment of the invention.

The proposed brake system contains a brake actuator 120, a brake unit 200, a gear assembly 220, a stepper motor 230, a position sensor 235 and a self-locking mechanism.

The brake actuator 120 is configured to receive a brake command cmd_{P}, for example in the form of a control signal CS over a data bus 150 in the rail vehicle 100.

In response to the brake command cmd_{P}, the brake actuator 120 is configured to produce an electric brake-force signal BF. The brake command cmd_{P} may, at least indirectly, specify a brake force to be applied.

The brake unit 200 includes first and second pressing members 211 and 212 respectively and a rotatable member 110 that is mechanically linked to at least one wheel 105 of the rail vehicle 100. The brake unit 200 is configured to receive the electric brake-force signal BF. In response to the electric brake-force signal BF, the brake unit 200 is configured to perform a braking operation. Typically, the brake command cmd_{P} is configured to cause the first and second pressing members 211 and 212 to apply a braking force to the rotatable member 110 so as to reduce a rotation speed of the at least one wheel 105. In a parking-brake situation, the brake command cmd_{P} is configured to cause the at least one wheel 105 to remain immobile. When the rail vehicle shall resume its movement, a negating parking-brake command cmd_{P} is produced which is configured cause the first and second pressing members 211 and 212 to release an already applied braking force to the rotatable member 110 so as to enable the rotatable member 110 and the at least one wheel 105 to rotate again.

The gear assembly 220 is arranged to operate mechanically on the first and second pressing members 211 and 212 respectively. Functionally, the gear assembly 220 is located between the stepper motor 230 and the pressing members 211 and 212.

In response to the electric brake-force signal BF, the stepper motor 230 is configured to act on the gear assembly 220 so as to cause the first and second pressing members 211 and 212 to move towards or away from the rotatable member 110 and attain a specified position interrelationship. Here, a first specified position interrelationship may correspond to a released state for the brake, i.e. wherein the rotatable member 110 and the at least one wheel 105 are enabled to rotate; and a second specified position interrelationship may correspond to a braked state, wherein the first and second pressing members 211 and 212 apply a braking force to the rotatable member 110 so as to keep the at least one wheel 105 immobile. Naturally, according to the invention, any number of intermediate states between the first and second states are conceivable, which intermediate states correspond to various magnitudes of braking force being applied to the at least one wheel 105.

The stepper motor 230 is advantageous because it provides highly accurate positioning of its power transmission shaft without requiring a position sensor for feedback. The stepper motor 230 is typically a brushless DC electric motor that divides a full rotation into a number of equal steps, say 100, which may be provided by a gear-shaped iron rotor with 25 teeth giving 3,6 degrees of rotation per step. The stepper motor 230 can be commanded to move and hold a position at one of these steps by open loop control provided that the motor is adapted to the application in respect to torque and speed.

However, due to various mechanical disturbances, e.g. caused by snow, ice, dirt and/or grit, the position to which the power transmission shaft is commanded may not always be achieved. Additionally, or alternatively, various components of the brake unit 200 may fail, e.g. pieces of brake linings 210 may fall off and/or bushings may be broken. Therefore, according to the invention, a position sensor 235 is configured to produce a position signal P that indicates an angular position of the power transmission shaft. The position sensor 235 may for example be arranged on the power transmission shaft of the stepper motor 230. The position signal P may here be represented by a number of electric or optic pulses, where the number of pulses is proportional to a rotational angle of the power transmission shaft.

The brake unit 200 is configured to receive the position signal P. Based thereon, the brake unit 200 is configured to determine whether the specified position interrelationship has been attained.

If the brake unit 200 determines that the specified position interrelationship has been attained, the brake unit 200 is configured to stop producing the electric brake-force signal BF, which allows the self-locking mechanism to lock the first and second pressing members 211 and 212 in the specified position interrelationship.

If, however, the brake unit 200 determines that the specified position interrelationship has not been attained, the brake unit 200 is configured to continue producing the electric brake-force signal BF until the specified position interrelationship has been attained.

According to one embodiment of the invention, the brake unit 200 further contains a load-cell sensor 250 configured to produce a sensor signal F representing the magnitude of a force applied by the first and second pressing members 211 and 212 on the rotatable member 110. The load-cell sensor 250 may be a ring-torsion type of sensor arranged on a first axis A1 included in a mechanical link between the gear assembly 220 and the first pressing member 211. Additionally, or alternatively, the load-cell sensor 250 may be arranged on a second axis A2 included in a mechanical link between the gear assembly 220 and the second pressing member 212.

Additionally, or alternatively, one or more load-cell sensors, e.g. of bending, shear, compression and/or tension type, may be arranged on the first and second pressing members 211 and 212.

In any case, the brake actuator 120 is configured to receive the sensor signal F, and based thereon generate a status message SS confirming that the brake command cmd_{P} has been effected.

The self-locking mechanism, which will be discussed in detail below with reference to Figures 2 to 6, is configured to lock the first and second pressing members 211 and 212 in the specified position interrelationship when the specified position interrelationship has been attained and maintain this condition irrespective of whether or not electric power W is supplied to the brake unit 200.

Preferably, for safety reasons, the self-locking mechanism is configured to exclusively allow the specified position interrelationship between the first and second pressing members 211 and 212 to be altered in response to action by the stepper motor 230, which action, in turn, is caused by the electric brake-force signal BF. In practice, this means that the only way to release a parking brake once it has been applied is to generate a negating brake command cmd_{P} to the brake actuator 120. The negating parking-brake command cmd_{P} causes the brake actuator 120 to produce such an electric brake-force signal BF that the specified position interrelationship between the first and second pressing members 211 and 212 is altered to the state in which the rotatable member 110 and the at least one wheel 105 are freed to rotate.

As mentioned above, the brake command cmd_{P} may be sent as a control signal CS over a data bus 150 in the rail vehicle 100. According to one embodiment of the invention, the rail vehicle 100 contains at least one first data bus 150 configured to communicate control signal CS. Preferably, the rail vehicle 100 also contains at least one second data bus 160 configured to communicate status messages SS, for example reflecting a current state of the brake, and/or the position interrelationship between the first and second pressing members 211 and 212.

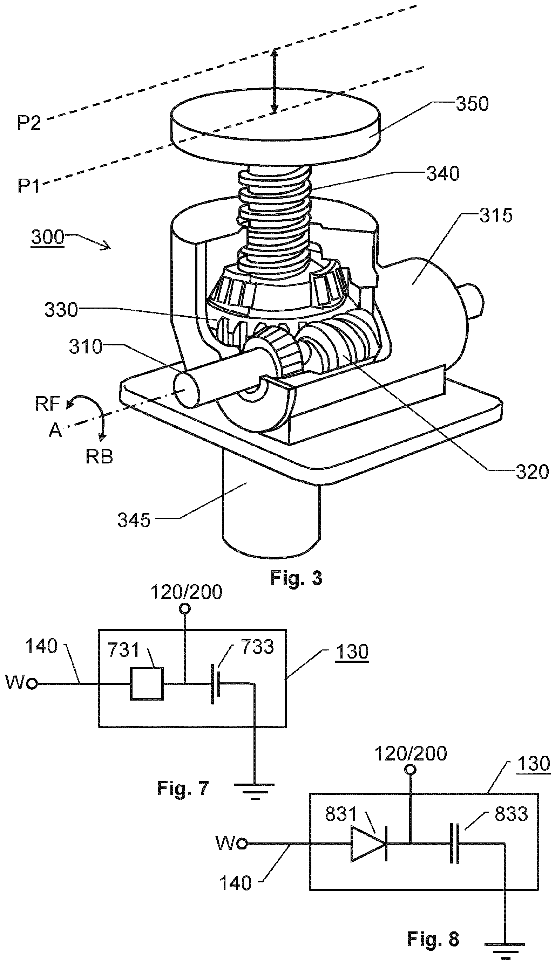

Figure 3 shows an example of the gear assembly 220 according to one embodiment of the invention, where the gear assembly 220 is implemented by a worm gear arrangement 300.

Here, mechanical power enters via a power transmission shaft 310 of the stepper motor 230. The stepper motor 230 is configured to rotate the power transmission shaft 310 in a forward direction RF or a backward direction RB. As a result, a load pad 350 is fed outward or inward, for example between first and second positions P1 and P2 respectively by action of an input worm 320 on a worm gear 330 acting on a lifting screw 340. Preferably, the worm gear arrangement 300 further includes first and second protection tubes 315 and 345 covering the input worm 320 and the lifting screw 340 respectively.

According to this embodiment of the invention, the worm gear arrangement 300 has such a gearing ratio that movement in the opposite direction is de facto impossible, i.e. pushing/pulling the load pad 350 to cause the power transmission shaft 310 to rotate in the forward or backward directions RF/RB. Consequently, the specified position interrelationship between the first and second pressing members 211 and 212 cannot be altered by movement of the first and second pressing members 211 and 212. In other words, in this embodiment, the worm gear arrangement 300 also constitutes the self-locking mechanism.

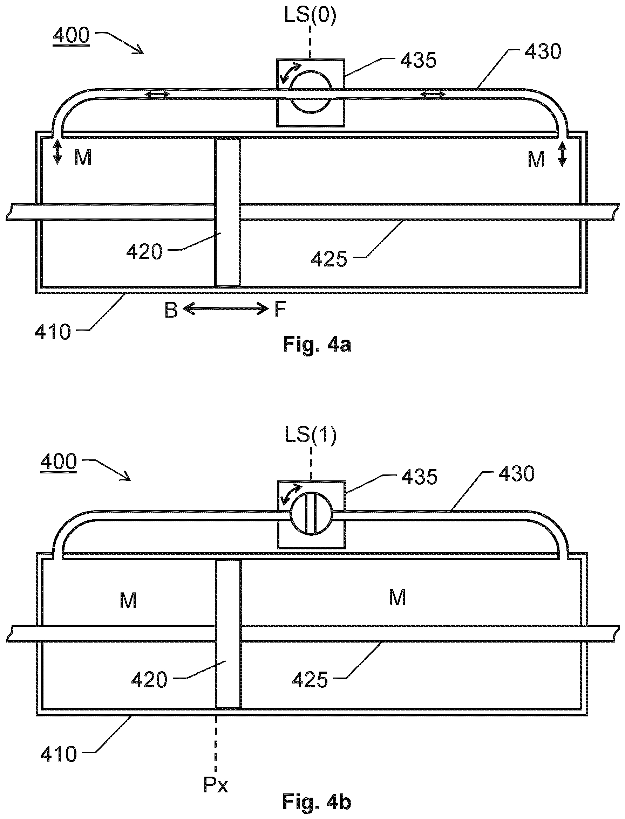

Figure 4a and 4b illustrate a second embodiment according to the invention, wherein the self-locking mechanism contains a hydraulic lock mechanism 400 arranged on an actuator 425 operated via the power transmission shaft 310 of the stepper motor 230. For example, in Figure 4, the actuator 425 corresponds to the lifting screw 340 in Figure 3.

The hydraulic lock mechanism 400 includes a hydraulic cylinder 410, a bypass conduit 430 and a counterbalanced valve 435.

The hydraulic cylinder 410 contains a wall member 420 that separates an interior of the hydraulic cylinder 410 into first and second fluid compartments, which are both filled with hydraulic fluid M. The wall member 420 is mechanically linked to the actuator 425 being operated directly or indirectly via the power transmission shaft 310.

The bypass conduit 430 interconnects the first and second fluid compartments outside of the hydraulic cylinder 410.

The counterbalanced valve 435 is arranged on the bypass conduit 430. In an open state LS(0), the counterbalanced valve 435 is configured to enable the hydraulic fluid M to pass between the first and second fluid compartments. Thus, the wall member 420 is allowed to move back B and forth F along the hydraulic cylinder 410, thereby enabling the actuator 425 to follow these movements. In a closed state LS(1), the counterbalanced valve 435 is configured to prevent the hydraulic fluid M to pass between the first and second fluid compartments. As a result, the wall member 420 is locked in a particular position Px with respect to the hydraulic cylinder 410, and the actuator 425 likewise becomes immobilized. When the specified position interrelationship has been attained, the counterbalanced valve 435 is controlled to the closed state LS(1), and the first and second pressing members 211 and 212 are locked in this position.

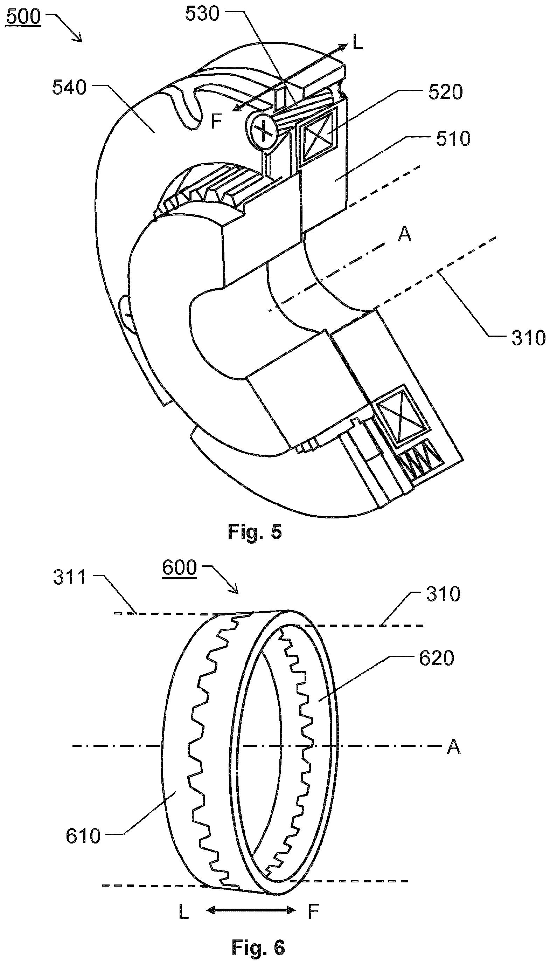

Figure 5 illustrates a third embodiment according to the invention, wherein the self-locking mechanism contains a motor-axle lock mechanism 500 arranged on the power transmission shaft 310 of the stepper motor 230. The motor-axle lock mechanism 500 includes a rotatable plate 540 and at least one locking pin 530.

The rotatable plate 540 is mechanically linked to the power transmission shaft 310.

The at least one locking pin 530 is configured to selectively either lock the rotatable plate 540, or allow the same to rotate freely around a symmetry axis A of the power transmission shaft 310.

The stepper motor 230 contains at least one cavity, e.g. in a yoke 510 of the stepper motor 230, which at least one cavity in a locked state L is configured to receive the at least one locking pin 530 and thereby hold the rotatable plate 540 and the power transmission shaft 310 stationary. In a unlocked state F, the at least one locking pin 530 is pulled out from the at least one cavity. As a result, the rotatable plate 540 and the power transmission shaft 310 are allowed to rotate freely around a symmetry axis A of the power transmission shaft 310. When the specified position interrelationship has been attained, the at least one locking pin 530 is controlled to the locked state L, and the first and second pressing members 211 and 212 are locked in this position.

Figure 6 illustrates a fourth embodiment of the invention, wherein the self-locking mechanism contains a toothed-wheel lock mechanism 600 arranged on the power transmission shaft 310 of the stepper motor 230.

The toothed-wheel lock mechanism 600 includes first and second toothed rings 610 and 620 respectively. The first toothed ring 610 non-rotatable, for example by being fixed to a stationary part of the stepper motor 230. The second toothed ring 620 is mechanically linked to the power transmission shaft 310 to be rotatable together with the power transmission shaft 310 around the symmetry axis A thereof. At least one of the first and second toothed rings 610 and/or 620 is configured to move along the symmetry axis A of the power transmission shaft 310 to selectively either cause a first set of teeth of the first toothed ring 610 to engage a second set of teeth of the second toothed ring 620, or disengage from the second set of teeth.

Said engagement represents a locked state L, wherein a rotation of the power transmission shaft 310 is prevented; and said disengagement represents an unlocked state F, wherein the power transmission shaft 310 is allowed to rotate freely around the symmetry axis A. When the specified position interrelationship has been attained, the first and second toothed rings 610 and 620 are controlled to the locked state L, and the first and second pressing members 211 and 212 are locked in this position.

Figures 7 and 8 show a backup power unit 130 according to embodiments of the invention. The backup power unit 130 is configured to receive electric power W from a power line 140 in the rail vehicle 100 during operation of the rail vehicle 100. Typically, electric power W is fed into the rail vehicle 100 via an external overhead line and an onboard current collector. The backup power unit 130 is configured to accumulate the received electric power W and feed at least a portion of the accumulated electric power to the brake actuator 120 and the brake unit 200 in case of an outage in the electric power W on the power line 140.

In the embodiment shown in Figure 7, the backup power unit 130 is connected between the power line 140 and the brake actuator 120 / brake unit 200. The backup power unit 130 contains a battery charger 731 and a rechargeable battery 733.

During normal operation of the rail vehicle 100, electric power W received from the power line 140 passes through the backup power unit 130. At the same time, the battery charger 731 receives the incoming electric power W and charges the battery 733. In case of electric power outage on the power line 140, accumulated electric power from the battery 733 will instead be fed out to the brake actuator 120 and the brake unit 200. Thus, regardless of whether there is electric power W on the power line 140, there will always be electric power available to the brake actuator 120 and the brake unit 200.

Figure 8 shows the backup power unit 130 according to a second embodiment of the invention. Here, the backup power unit 130 contains a rectifier 831 and at least one capacitive element 833. Analogous to the above, in the embodiment shown in Figure 8, the backup power unit 130 is connected between the power line 140 and the brake actuator 120 / brake unit 200.

During normal operation of the rail vehicle 100, electric power W received from the power line 140 passes through the backup power unit 130. At the same time, the rectifier 831 forwards incoming electric power W to the at least one capacitive element 833. In case of electric power outage on the power line 140, electric power accumulated in the at least one capacitive element 833 will instead be fed out to the brake actuator 120 and the brake unit 200. Thus, regardless of whether there is electric power W on the power line 140, there will always be electric power available to the brake actuator 120 and the brake unit 200.

Variations to the disclosed embodiments can be understood and effected by those skilled in the art in practicing the claimed invention, from a study of the drawings, the disclosure, and the appended claims.

The term "comprises/comprising" when used in this specification is taken to specify the presence of stated features, integers, steps or components. The term does not preclude the presence or addition of one or more additional elements, features, integers, steps or components or groups thereof. The indefinite article "a" or "an" does not exclude a plurality. In the claims, the word "or" is not to be interpreted as an exclusive or (sometimes referred to as "XOR"). On the contrary, expressions such as "A or B" covers all the cases "A and not B", "B and not A" and "A and B", unless otherwise indicated. The mere fact that certain measures are recited in mutually different dependent claims does not indicate that a combination of these measures cannot be used to advantage. Any reference signs in the claims should not be construed as limiting the scope.

It is also to be noted that features from the various embodiments described herein may freely be combined, unless it is explicitly stated that such a combination would be unsuitable.

The invention is not restricted to the described embodiments in the figures, but may be varied freely within the scope of the claims.

## Claims

1. A brake system for a rail vehicle (100), which brake system comprises:
a brake actuator (120) configured to receive a brake command (cmd_{P}), and in response thereto produce an electric brake-force signal (BF), and
a brake unit (200) comprising first and second pressing members (211, 212) and a rotatable member (110) being mechanically linked to at least one wheel (105) of the rail vehicle (100), which brake unit (200) is configured to receive the electric brake-force signal (BF), and in response thereto cause the first and second pressing members (211, 212) to apply a braking force to the rotatable member (110),
a gear assembly (220) arranged to operate mechanically on the first and second pressing members (211; 212), and
a self-locking mechanism (300, 400, 500, 600) configured to lock the first and second pressing members (211; 212) if a supply of electric power (W) to the brake unit (200) fails,
**characterized in that** the brake unit (200) comprises:
a stepper motor (230) configured to act on the gear assembly (220) in response to the electric brake-force signal (BF), so as to cause the first and second pressing members (211; 212) to move towards or away from the rotatable member (110) and attain a specified position interrelationship, and
a position sensor (235) configured to produce a position signal (P) indicating an angular position of a power transmission shaft of the stepper motor (230),
wherein the brake unit (200) is configured to receive the position signal (P), and based thereon determine whether the specified position interrelationship has been attained; and if so, stop producing the electric brake-force signal (BF) allowing the self-locking mechanism (300, 400, 500, 600) to lock the first and second pressing members (211; 212) in the specified position interrelationship.

2. The brake system according to claim 1, wherein:
the brake unit (200) further comprises a load-cell sensor (250) configured to produce a sensor signal (F) representing the magnitude of a force applied by the first and second pressing members (211, 212) on the rotatable member (110), and
the brake actuator (120) is configured to receive the sensor signal (F), and based thereon generate a status message (SS) confirming that the brake command (cmd_{P}) has been effected.

3. The brake system according to any one of the claims 1 or 2, wherein the self-locking mechanism (300, 400, 500, 600) is configured to exclusively allow the specified position interrelationship between the first and second pressing members (211; 212) to be altered in response to action by stepper motor (230), which action is caused by the electric brake-force signal (BF).

4. The brake system according to claim 3, wherein the gear assembly (220) comprises a worm gear arrangement (300) with a gearing ratio configured to de facto prevent the specified position interrelationship to be altered by movement of the first and second pressing members (211; 212), the self-locking mechanism thus being constituted by the worm gear arrangement (300).

5. The brake system according to claim 3, wherein the self-locking mechanism comprises one of:
a hydraulic lock mechanism (400),
a motor-axle lock mechanism (500), and
a toothed-wheel lock mechanism (600) arranged on the power transmission shaft (310) of the stepper motor (230).

6. The brake system according to claim 5, wherein the self-locking mechanism comprises the hydraulic lock mechanism (400), which, in turn, further comprises:
a hydraulic cylinder (410) with first and second fluid compartments separated by a wall member (420) being mechanically linked to an actuator (425) operated via the power transmission shaft (310),
a bypass conduit (430) interconnecting the first and second fluid compartments, and
a counterbalanced valve (435) arranged on the bypass conduit 430, which counterbalanced valve (435) is configured to, in an open state LS(0), enable hydraulic fluid (M) to pass between the first and second fluid compartments thus allowing the wall member (420) to move (B/F) along the hydraulic cylinder (410); and in a closed state (LS(1)), prevent hydraulic fluid (M) to pass between the first and second fluid compartments thus locking the wall member (420) in a particular position (Px) with respect to the hydraulic cylinder (410).

7. The brake system according to claim 5, wherein the self-locking mechanism comprises the motor-axle lock mechanism (500), which, in turn, further comprises:
a rotatable plate (540) mechanically linked to the power transmission shaft (310), and
at least one locking pin (530) configured to selectively either lock the rotatable plate (540) against a fix part (510) of the stepper motor (230), or allow the rotatable plate (540) to rotate freely around a symmetry axis (A) of the power transmission shaft (310).

8. The brake system according to claim 5, wherein the self-locking mechanism comprises the toothed-wheel lock mechanism (600), which, in turn, further comprises:
a first toothed ring (610) being non-rotatable, and
a second toothed ring (620) being mechanically linked to the power transmission shaft (310),
wherein at least one of the first and second toothed rings (610, 620) is configured to move along a symmetry axis (A) of the power transmission shaft (310) to selectively either cause a first set of teeth of the first toothed ring (610) to engage a second set of teeth of the second toothed ring (620), thus preventing a rotation of the power transmission shaft (310); or disengaging the first and second sets of teeth, thus allowing the power transmission shaft (310) to rotate freely around the symmetry axis (A).

9. The brake system according to any one of the preceding claims, further comprising a backup power unit (130) configured to:
receive electric power (W) from a power line (140) in the rail vehicle (100) during operation of the rail vehicle (100);
accumulate the received electric power (W); and
provide the accumulated electric power to the brake actuator (120) and the brake unit (200) in case of an outage of the electric power (W) on the power line (140).

10. The brake system according to claim 9, wherein the backup power unit (130) comprises:
at least one rechargeable battery (733), and
a battery charger (731) connected to the power line (140) and configured to transfer electric power (W) received from the power line (140) to the at least one rechargeable battery (733), wherein the at least one rechargeable battery (733) is arranged to feed electric power to the brake actuator (120) and the brake unit (200) if the electric power (W) on the power line (140) fails.

11. The brake system according to claim 9, wherein the backup power unit (130) comprises:
at least one capacitive element (833), and
a rectifier (831) connected to the power line (140) and configured to transfer electric power (W) received from the power line (140) to the at least one capacitive element (833),
wherein the at least one capacitive element (833) is arranged to feed electric power to the brake actuator (120) and the brake unit (200) if the electric power (W) on the power line (140) fails.

12. The brake system according to any one of the preceding claims, wherein the brake actuator (120) is connected to at least one data bus (150, 160) in the rail vehicle (100), which at least one data bus (150, 160) is configured to communicate at least one of control signals (CS) and status messages (SS).

13. The brake system according to claim 12, wherein the brake actuator (120) is configured to receive the brake command (cmd_{P}) as one of the at least one control signal (CS) via one of the at least one data bus (150).

## Patentansprüche

1. Bremssystem für ein Schienenfahrzeug (100), wobei das Bremssystem aufweist:
einen Bremsaktuator (120), der konfiguriert ist, um einen Bremsbefehls (cmdp) zu empfangen und ansprechend darauf ein elektrisches Bremskraftsignal (BF) zu erzeugen, und
eine Bremseinheit (200), die ein erstes und zweites Druckelement (211, 212) und ein drehbares Element (110), das mit wenigstens einem Rad (105) des Schienenfahrzeus (100) mechanisch verbunden ist, aufweist, wobei die Bremseinheit (200) konfiguriert ist, um das elektrische Bremskraftsignal (BF) zu empfangen und ansprechend darauf zu bewirken, dass das erste und zweite Druckelement (211, 212) eine Bremskraft auf das drehbare Element (110) anwenden,
eine Getriebeanordnung (220), die eingerichtet ist, um mechanisch auf die ersten und zweiten Druckelemente (211; 212) einzuwirken, und
einen selbstsperrenden Mechanismus (300, 400, 500, 600), der konfiguriert ist, um das erste und zweite Druckelement (211; 212) zu sperren, wenn eine elektrische Leistungszufuhr (W) der Bremseinheit (200) ausfällt,
**dadurch gekennzeichnet, dass** die Bremseinheit (200) aufweist:
einen Schrittmotor (230), der konfiguriert ist, um ansprechend auf das elektrische Bremskraftsignal (BF) auf die Getriebeanordnung (220) zu wirken, um zu bewirken, dass das erste und zweite Druckelement (211; 212) sich auf das drehbare Element (110) zu oder davon weg bewegen und eine spezifizierte wechselseitige Positionsbeziehung erreichen, und
einen Positionssensor (235), der konfiguriert ist, um ein Positionssignal (P) zu erzeugen, das eine Winkelposition einer Kraftübertragungswelle des Schrittmotors (230) anzeigt;
wobei die Bremseinheit (200) konfiguriert ist, um das Positionssignal (P) zu empfangen und basierend darauf zu bestimmen, ob die spezifizierte Positionsbeziehung erreicht wurde; und wenn ja, die Erzeugung des elektrischen Bremskraftsignals (BF) zu stoppen, was es dem selbstsperrenden Mechanismus (300, 400, 500, 600) ermöglicht, das erste und zweite Druckelement (211; 212) in der spezifizierten Positionsbeziehung zu sperren.

2. Bremssystem nach Anspruch 1, wobei:
die Bremseinheit (200) ferner einen Kraftaufnehmer (250) aufweist, der konfiguriert ist, um ein Sensorsignal (F) zu erzeugen, welches die Größe einer Kraft darstellt, die von dem ersten und zweiten Druckelement (211; 212) auf das drehbare Element (110) angewendet wird, und
der Bremsaktuator (120) konfiguriert ist, um das Sensorsignal (F) zu empfangen und basierend darauf eine Statusnachricht (SS) zu erzeugen, welche bestätigt, dass der Bremsbefehl (cmd_{P}) herbeigeführt wurde.

3. Bremssystem nach einem der Ansprüche 1 oder 2, wobei der selbstsperrende Mechanismus (300, 400, 500, 600) konfiguriert ist, um zu ermöglichen, dass die spezifizierte Positionsbeziehung zwischen dem ersten und zweiten Druckelement (211; 212) ausschließlich ansprechend auf eine Tätigkeit durch den Schrittmotor (230) verändert wird, wobei diese Tätigkeit durch das elektrische Bremskraftsignal (BF) bewirkt wird.

4. Bremssystem nach Anspruch 3, wobei die Getriebeanordnung (220) eine Schneckengetriebeanordnung (300) mit einem Übersetzungsverhältnis aufweist, das konfiguriert ist, um de facto zu verhindern, dass die spezifizierte Positionsbeziehung durch die Bewegung des ersten und zweiten Druckelements (211; 212) verändert wird, wobei der selbstsperrende Mechanismus somit durch die Schneckengetriebeanordnung (300) gebildet wird.

5. Bremssystem nach Anspruch 3, wobei der selbstsperrende Mechanismus einen der folgenden aufweist:
einen hydraulischen Sperrmechanismus (400),
einen Motor-Achsen-Sperrmechanismus (500) und
einen Zahnradsperrmechanismus (600),
die auf der Kraftübertragungswelle (310) des Schrittmotors (230) angeordnet sind.

6. Bremssystem nach Anspruch 5, wobei der selbstsperrende Mechanismus den hydraulischen Sperrmechanismus (400) aufweist, der wiederum ferner aufweist:
einen Hydraulikzylinder (410) mit einer ersten und zweiten Fluidkammer, die durch ein Wandelement (420) getrennt sind, welches mechanisch mit einem Aktuator (425) verbunden ist, der über die Kraftübertragungswelle (310) betätigt wird,
einen Umleitungskanal (430), der die erste und zweite Fluidkammer miteinander verbindet, und
ein Ausgleichsventil (435), das auf dem Umleitungskanal (430) angeordnet ist, wobei das Ausgleichsventil (435) konfiguriert ist, um in einem offenen Zustand LS(0) zu ermöglichen, dass Hydraulikfluid (M) zwischen der ersten und zweiten Fluidkammer hindurchgeht, wobei auf diese Weise ermöglicht wird, dass sich das Wandelement (420) entlang des Hydraulikzylinders (410) bewegt (B/F); und um in einem geschlossenen Zustand LS(1) zu verhindern, dass Hydraulikfluid (M) zwischen der ersten und zweiten Fluidkammer hindurchgeht, wobei das Wandelement (420) in einer bestimmten Position (Px) in Bezug auf den Hydraulikzylinder (410) gesperrt wird.

7. Bremssystem nach Anspruch 5, wobei der selbstsperrende Mechanismus einen Motor-Achsen-Sperrmechanismus (500) aufweist, der wiederum ferner aufweist:
eine drehbare Platte (540), die mit der Kraftübertragungswelle (310) mechanisch verbunden ist, und
wenigstens einen Sperrstift (530), der konfiguriert ist, um die drehbare Platte (540) wahlweise entweder gegen einen festen Teil (510) des Schrittmotors (320) zu sperren, oder zu ermöglichen, dass die drehbare Platte (540) sich frei um eine Symmetrieachse (A) der Kraftübertragungswelle (310) dreht.

8. Bremssystem nach Anspruch 5, wobei der selbstsperrende Mechanismus den Zahnradsperrmechanismus (600) aufweist, der wiederum ferner aufweist:
einen ersten Zahnkranz (610), der nicht drehbar ist, und
einen zweiten Zahnkranz (620) der mit der Kraftübertragungswelle (310) mechanisch verbunden ist,
wobei wenigstens einer des ersten und zweiten Zahnkränzes (610, 620) konfiguriert ist, um sich entlang einer Symmetrieachse (A) der Kraftübertragungswelle (310) zu bewegen, um wahlweise entweder zu bewirken, dass ein erster Satz von Zähnen des ersten Zahnkranzes (610) in einen zweiten Satz von Zähnen des zweiten Zahnkranzes (620) eingreift, wobei auf diese Weise eine Drehung der Kraftübertragungswelle (310) verhindert wird, oder um den ersten und zweiten Satz von Zähnen zu entkoppeln, wobei auf diese Weise ermöglicht wird, dass sich die Kraftübertragungswelle (300) frei um die Symmetrieachse (A) dreht.

9. Bremssystem nach einem der vorhergehenden Ansprüche, das ferner eine Ersatzstromversorgung (130) aufweist, die konfiguriert ist, um:
während des Betriebs des Schienenfahrzeugs (100) elektrische Leistung (W) von einer Stromleitung (140) in dem Schienenfahrzeug (100) zu empfangen;
die empfangene elektrische Leistung (W) zu speichern; und
die gespeicherte elektrische Leistung im Fall eines Ausfalls der elektrischen Leistung (W) auf der Stromleitung (140) an den Bremsaktuator (120) und die Bremseinheit (200) bereitzustellen.

10. Bremssystem nach Anspruch 9, wobei die Ersatzstromversorgung (130) aufweist:
wenigstens eine wiederaufladbare Batterie (733), und
ein Batterieladegerät (731), das mit der Stromleitung (140) verbunden ist und konfiguriert ist, um von der Stromleitung (140) empfangene elektrische Leistung (W) an die wenigstens eine wiederaufladbare Batterie (733) zu überführen, wobei die wenigstens eine wiederaufladbare Batterie (733) eingerichtet ist, um elektrische Leistung an den Bremsaktuator (120) und die Bremseinheit (200) zu speisen, wenn die elektrische Leistung (W) auf der Stromleitung (140) ausfällt.

11. Bremssystem nach Anspruch 9, wobei die Ersatzstromversorgung (130) aufweist:
wenigstens ein kapazitives Element (833), und
einen Gleichrichter (831), der mit der Stromleitung (140) verbunden ist und konfiguriert ist, um von der Stromleitung (140) empfangene elektrische Leistung (W) an das wenigstens eine kapazitive Element (833) zu überführen,
wobei das wenigstens eine kapazitive Element (833) eingerichtet ist, um elektrische Leistung an den Bremsaktuator (120) und die Bremseinheit (200) zu speisen, wenn die elektrische Leistung (W) auf der Stromleitung (140) ausfällt.

12. Bremssystem nach einem der vorhergehenden Ansprüche, wobei der Bremsaktuator (120) mit wenigstens einem Datenbus (150, 160) in dem Schienenfahrzeug (100) verbunden ist, wobei der wenigstens eine Datenbus (150, 160) konfiguriert ist, um Steuersignale (CS) und/oder Statusnachrichten (SS) zu übermitteln.

13. Bremssystem nach Anspruch 12, wobei der Bremsaktuator (120) konfiguriert ist, um den Bremsbefehl (cmd_{P}) als eines des wenigstens einen Steuersignals (CS) über den wenigstens einen Datenbus (150) zu empfangen.

## Revendications

1. Système de frein pour un véhicule ferroviaire (100), ledit système de frein comprenant :
un actionneur de frein (120) configuré pour recevoir une commande de frein (cmd_{P}) et, en réponse à celle-ci, produire un signal de force de frein électrique (BF), et
une unité de frein (200) comprenant des premier et deuxième éléments de pression (211, 212) et un élément rotatif (110) qui est lié mécaniquement à au moins une roue (105) du véhicule ferroviaire (100), ladite unité de frein (200) étant configurée pour recevoir le signal de force de frein électrique (BF) et, en réponse à celui-ci, amener les premier et deuxième éléments de pression (211, 212) à appliquer une force de freinage à l'élément rotatif (110),
un ensemble d'engrenage (220) agencé pour fonctionner mécaniquement sur les premier et deuxième éléments de pression (211, 212), et
un mécanisme d'autoverrouillage (300, 400, 500, 600) configuré pour verrouiller les premier et deuxième éléments de pression (211, 212) en cas de panne de distribution d'énergie électrique (W) à l'unité de frein (200),
**caractérisé en ce que** l'unité de frein (200) comprend :
un moteur pas-à-pas (230) configuré pour agir sur l'ensemble d'engrenage (220) en réponse au signal de force de frein électrique (BF), de manière à amener les premier et deuxième éléments de pression (211, 212) à se rapprocher ou à s'éloigner de l'élément rotatif (110) et à atteindre une interrelation de position spécifiée, et
un capteur de position (235) configuré pour produire un signal de position (P) indiquant une position angulaire d'un arbre de transmission de puissance du moteur pas-à-pas (230),
dans lequel l'unité de frein (200) est configurée pour recevoir le signal de position (P) et, sur la base de celui-ci, déterminer si l'interrelation de position spécifiée a été ou non atteinte et, si tel est le cas, arrêter la production du signal de force de frein électrique (BF) en permettant au mécanisme d'autoverrouillage (300, 400, 500, 600) de verrouiller les premier et deuxième éléments de pression (211, 212) dans l'interrelation de position spécifiée.

2. Système de frein selon la revendication 1, dans lequel :
l'unité de frein (200) comprend en outre un capteur de cellule de charge (250) configuré pour produire un signal de capteur (F) représentant la grandeur d'une force appliquée par les premier et deuxième éléments de pression (211, 212) sur l'élément rotatif (110), et
l'actionneur de frein (120) est configuré pour recevoir le signal de capteur (F) et, sur la base de celui-ci, générer un message de statut (SS) confirmant que la commande de frein (cmd_{P}) a été effectuée.

3. Système de frein selon la revendication 1 ou 2, dans lequel le mécanisme d'autoverrouillage (300, 400, 500, 600) est configuré pour permettre exclusivement l'altération de l'interrelation de position spécifiée entre les premier et deuxième éléments de pression (211, 212) en réponse à une action du moteur pas-à-pas (230), ladite action étant provoquée par le signal de force de frein électrique (BF).

4. Système de frein selon la revendication 3, dans lequel l'ensemble d'engrenage (220) comprend un agencement d'engrenage à vis sans fin (300) avec un rapport d'engrenage configuré pour empêcher de facto toute altération de l'interrelation de position spécifiée par un déplacement des premier et deuxième éléments de pression (211, 212), le mécanisme d'autoverrouillage étant ainsi constitué de l'agencement d'engrenage à vis sans fin (300).

5. Système de frein selon la revendication 3, dans lequel le mécanisme d'autoverrouillage comprend l'un parmi :
un mécanisme de verrouillage hydraulique (400),
un mécanisme de verrouillage d'essieu de moteur (500), et
un mécanisme de verrouillage à roue dentée (600)
agencé sur l'arbre de transmission de puissance (310) du moteur pas-à-pas (230).

6. Système de frein selon la revendication 5, dans lequel le mécanisme d'autoverrouillage comprend le mécanisme de verrouillage hydraulique (400) qui, à son tour, comprend en outre :
un vérin hydraulique (410) avec des premier et deuxième compartiments de fluide séparés par un élément de paroi (420) qui est lié mécaniquement à un actionneur (425) actionné via l'arbre de transmission de puissance (310),
un conduit de dérivation (430) interconnectant les premier et deuxième compartiments de fluide, et
une vanne contrebalancée (435) agencée sur le conduit de dérivation (430), ladite vanne contrebalancée (435) étant configurée pour, dans un état ouvert (LS(0)), permettre le passage d'un fluide hydraulique (M) entre les premier et deuxième compartiments de fluide en autorisant ainsi l'élément de paroi (420) à se déplacer (B/F) le long du vérin hydraulique (410) et, dans un état fermé (LS(1)), empêcher le passage d'un fluide hydraulique (M) entre les premier et deuxième compartiments de fluide en verrouillant ainsi l'élément de paroi (420) dans une position particulière (Px) par rapport au vérin hydraulique (410).

7. Système de frein selon la revendication 5, dans lequel le mécanisme d'autoverrouillage comprend le mécanisme de verrouillage d'essieu de moteur (500) qui, à son tour, comprend en outre :
une plaque rotative (540) liée mécaniquement à l'arbre de transmission de puissance (310), et
au moins une goupille de verrouillage (530) configurée pour sélectivement soit verrouiller la plaque rotative (540) contre une partie fixe (510) du moteur pas-à-pas (230), soit permettre à la plaque rotative (540) de tourner librement autour d'un axe de symétrie (A) de l'arbre de transmission de puissance (310).

8. Système de frein selon la revendication 5, dans lequel le mécanisme d'autoverrouillage comprend le mécanisme de verrouillage à roue dentée (600) qui, à son tour, comprend en outre :
une première couronne dentée (610) qui n'est pas rotative, et
une deuxième couronne dentée (620) qui est liée mécaniquement à l'arbre de transmission de puissance (310),
dans lequel au moins l'une des première et deuxième couronnes dentées (610, 620) est configurée pour se déplacer le long d'un axe de symétrie (A) de l'arbre de transmission de puissance (310) pour sélectivement soit amener un premier ensemble de dents de la première couronne dentée (610) à s'engager avec un deuxième ensemble de dents de la deuxième couronne dentée (620), en empêchant ainsi toute rotation de l'arbre de transmission de puissance (310), soit désengager les premier et deuxième ensembles de dents, en permettant ainsi à l'arbre de transmission de puissance (310) de tourner librement autour de l'axe de symétrie (A).

9. Système de frein selon l'une quelconque des revendications précédentes, comprenant en outre une unité de puissance de secours (130) configurée pour :
recevoir de l'énergie électrique (W) d'une ligne de puissance (140) dans le véhicule ferroviaire (100) pendant le fonctionnement du véhicule ferroviaire (100) ;
accumuler l'énergie électrique (W) reçue ; et
fournir l'énergie électrique accumulée à l'actionneur de frein (120) et à l'unité de frein (200) en cas de panne d'énergie électrique (W) sur la ligne de puissance (140).

10. Système de frein selon la revendication 9, dans lequel l'unité de puissance de secours (130) comprend :
au moins une batterie rechargeable (733), et
un chargeur de batterie (731) relié à la ligne de puissance (140) et configuré pour transférer de l'énergie électrique (W) reçue depuis la ligne de puissance (140) à l'au moins une batterie rechargeable (733), dans lequel l'au moins une batterie rechargeable (733) est agencée pour distribuer de l'énergie électrique à l'actionneur de frein (120) et à l'unité de frein (200) en cas de panne d'énergie électrique (W) sur la ligne de puissance (140).

11. Système de frein selon la revendication 9, dans lequel l'unité de puissance de secours (130) comprend :
au moins un élément capacitif (833), et
un redresseur (831) relié à la ligne de puissance (140) et configuré pour transférer de l'énergie électrique (W) reçue depuis la ligne de puissance (140) à l'au moins un élément capacitif (833),
dans lequel l'au moins un élément capacitif (833) est agencé pour distribuer de l'énergie électrique à l'actionneur de frein (120) et à l'unité de frein (200) en cas de panne d'énergie électrique (W) sur la ligne de puissance (140).

12. Système de frein selon l'une quelconque des revendications précédentes, dans lequel l'actionneur de frein (120) est relié à au moins un bus de données (150, 160) dans le véhicule ferroviaire (100), ledit au moins un bus de données (150, 160) étant configuré pour communiquer au moins l'un parmi des signaux de commande (CS) et des messages de statut (SS).

13. Système de frein selon la revendication 12, dans lequel l'actionneur de frein (120) est configuré pour recevoir la commande de frein (cmd_{P}) en tant que l'un de l'au moins un signal de commande (CS) via l'un de l'au moins un bus de données (150).
